# EUROPÄISCHE PATENTSCHRIFT

(11) **EP 1 091 466 B1**
(45) Veröffentlichungstag und Bekanntmachung des Hinweises auf die Patenterteilung: **07.05.2003**
(21) Anmeldenummer: 00121418.8
(22) Anmeldetag: 29.09.2000
(51) Int. Cl.: H02G 15/06

(54) **Kabelendverschluss für Hochspannungskabel**
Cable terminal for high-voltage cable
Boîte d'extrémité de câbles pour câbles à haute tension

(30) Priorität: 08.10.1999 DE 19948439
(43) Veröffentlichungstag der Anmeldung: 11.04.2001
(73) Patentinhaber: ABB PATENT GmbH, 68526 Ladenburg (DE)
(72) Erfinder: Müller, Karl-Bernhard, Dr.-Ing., 68723 Schwetzingen (DE); Kaumanns, Johannes, Dr.-Ing., 69190 Walldorf (DE)
(74) Vertreter: Miller, Toivo

(56) Entgegenhaltungen:
- DE-A- 19 758 099
- US-A- 4 060 583
- PATENT ABSTRACTS OF JAPAN vol. 002, no. 149 (E-077), 13. Dezember 1978 (1978-12-13) & JP 53 116492 A (FURUKAWA ELECTRIC CO LTD:THE), 11. Oktober 1978 (1978-10-11)

## Beschreibung

Die Erfindung bezieht sich auf einen Kabelendverschluß für Hochspannungskabel gemäß dem Oberbegriff des Anspruchs 1. Der Kabelendverschluß ist insbesondere als Freiluftendverschluß einsetzbar.

Aus JP-A-53 116492 ist ein Kabelendverschluß bekannt, bei dem in eine Porzellanröhre ein als Freon-Schaumgummi aufbereiteter elektrischer Isolierstoff eingebracht ist, um derart im Betrieb auftretende thermische Ausdehnungen zu beherrschen. Der unvulkanisierten Gummi enthaltende Isolierstoff wird zunächst in flüssiger Form in die Porzellanröhre eingefüllt und anschließend durch Erhitzen vulkanisiert und ausgehärtet. Der gebildete Schaumgummi stellt einen elastischen Körper mit hoher Kompressibilität und hohem Isolationswiderstand dar. Bei einem herkömmlichen Freiluftendverschluß für Hoch- und Höchstspannungskabel wird die elektrische Festigkeit innerhalb eines Isolators mit einer Isolierflüssigkeitbeispielsweise Poly-Isobuten - oder mit einem Isoliergas - beispielsweise SF6-erreicht. Der Isolator besteht dabei meist aus Porzellan oder einem Verbundwerkstoffbeispielsweise GfK-Rohr (GfK = glasfaserverstärkter Kunststoff) mit Silikonschirmen-und besitzt Stützereigenschaften, d. h. mechanische Trageigenschaften.

Die dabei verwendeten flüssigen oder gasförmigen Isoliermedien haben den Nachteil, daß sie bei unzureichender Abdichtung gegenüber dem Außenraum aus dem Endverschluß austreten können, wonach die Funktionsfähigkeit des Endverschlusses nicht mehr gewährleistet ist. Dies kann insbesondere durch die Forderung nach einer möglichst langen Lebensdauer von typischerweise mehr als dreißig Jahren bei gleichzeitiger Wartungsfreiheit des Endverschlusses problematisch werden. Zudem belasten die üblicherweise verwendeten flüssigen oder gasförmigen Isoliermedien im Falle einer Leckage die Umwelt.

Es sind Ausführungsbeispiele eines Kabelendverschlusses bzw. Freiluftendverschlusses in "trockener" Ausführung, d. h. ohne flüssige oder gasförmige Isoliermedien allgemein bekannt, wobei auf das Kabelende aufschiebbare elastische Isolierkörper - vorzugsweise aus Silikonkautschuk bestehend - verwendet werden, die jedoch auf Grund ihrer mechanischen Flexibilität keine Stützereigenschaften, d. h. mechanische Trageigenschaften haben.

Ferner ist ein "trockener" Freiluftendverschluß allgemein bekannt, bei dem die Isolierflüssigkeit durch einen vorgeformten Schaumstoff ersetzt wird, wobei jedoch der Nachteil auftritt, daß bei nicht absolut genauer Formgebung des Schaumstoffs oder ungenauer Montage mit Luft gefüllte Hohlräume innerhalb des Isolators entstehen, so daß das Risiko einer Teilentladungsbildung mit nachfolgendem Durchschlag nicht ausgeschlossen ist.

Der Erfindung liegt die Aufgabe zugrunde, einen Kabelendverschluß für Hochspannungskabel der eingangs genannten Art anzugeben, der sowohl die geforderte Stützereigenschaft besitzt als auch eine lange Lebensdauer bei Wartungsfreiheit aufweist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß beim vorgeschlagenen "trockenen" Kabelendverschluß für Hochspannungskabel keinerlei Gefahr einer Leckage und einer Umweltgefährdung durch bei einer Leckage austretendes Isoliermedium besteht. Die Gefahr von Teilentladungen durch ungenaue Passungen ist ausgeschlossen. Die erwartete Lebensdauer bei Wartungsfreiheit wird problemlos erreicht. Die im Kabelendverschluß während des Betriebes entstehende Verlustwärme wird in zufriedenstellendem Maße axial (bezüglich der durch das Hochspannungskabel vorgegebenen Längsachse) nach außen abgeführt.

Weitere Vorteile sind aus der nachstehenden Beschreibung ersichtlich.

Vorteilhafte Ausgestaltungen der Erfindung sind in den Unteransprüchen gekennzeichnet.

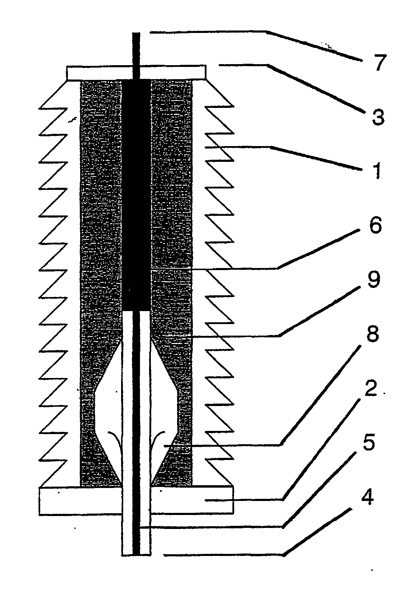

Die Erfindung wird nachstehend anhand des in der Zeichnung dargestellten Ausführungsbeispieles erläutert. In der einzigen Fig. ist ein "trockener" Freiluftendverschluß dargestellt. Es ist ein zylinderförmiger Isolator 1 zu erkennen, dessen eine Stirnfläche mit einer Grundplatte 2 und dessen weitere Stirnfläche mit einer Kopfelektrode 3 abgeschlossen ist. Als Isolator 1 wird vorzugsweise ein Porzellan- oder Verbundisolator verwendet, welcher die geforderten Stützereigenschaften in allgemein bekannter Weise übernimmt. Die Grundplatte 2 weist eine zentrale Bohrung zur Durchführung eines Hochspannungskabels 4 mit Kunststoffisolierung (Kabelisolierung) auf.

Der Leiter 5 des axial innerhalb des Isolators 1 verlaufenden Hochspannungskabels 4 ist mit einem Leiterabschluß verbunden, welcher bis zur Kopfelektrode 3 verläuft. Die Verbindung zwischen Leiter 5 und Leiterabschluß 6 ist gesteckt oder geschraubt oder geschweißt oder gepreßt. Dabei kann der Leiterabschluß 6 auch rohrförmig ausgebildet sein. Ein mit dem Leiterabschluß 6 fest verbundener Anschlußbolzen 7 greift durch eine zentrale Bohrung der Kopfelektrode 3.

Der innerhalb des Isolators 1 verlaufende Abschnitt des Hochspannungskabels 4 ist konzentrisch mit einem Feldsteuerelement 8 umgeben. Der Übergang zwischen dem elektrischen Feld im Hochspannungskabel 4 und dem Endverschluß wird im Ausführungsbeispiel durch das Feldsteuerelement 8 aus einem vorgefertigten Stresskonus gelöst, andere Arten der Feldsteuerung - beispielsweise mit einem refraktiven/resistiven Belag oder mit kapazitiven Einlagen sind ebenso möglich.

Der nicht vom Hochspannungskabel 4, Feldsteuerelement 8 und Leiterabschluß 6 eingenommene Raum des Innenraums des Isolators 1 ist vollständig mit einem Isolierstoff 9 ausgefüllt. Dabei dient ein isolierender Schaumstoff oder eine isolierende und kompressible Vergußmasse als Isolierstoff 9. Der verwendete lsolierstoff 9 muß geeignete elektrische und mechanische Eigenschaften besitzen. Insbesondere muß er unter allen Betriebszuständen eine ausreichende Elastizität und Oberflächenhaftung zu den unterschiedlichen Materialien der Komponenten im Innenraum des Kabelendverschlusses besitzen, damit es nicht zu einer Ausbildung von Rissen, Spalten und Ablösungen an Randflächen infolge von thermischen Ausdehnungen kommen kann, die im Betrieb zum Ausbilden von Teilentladungen führt, was einen elektrischen Durchschlag und eine Zerstörung des Endverschlusses zur Folge hätte.

Ein solcher Isolierstoff 9 - vorzugsweise auf der Basis von Silikongummi oder Polyurethan - ist beispielsweise bei Hohlbauteilen aus Kunststoff allgemein bekannt und läßt sich in flüssiger Form in beliebig geformte Hohlräume einfüllen. Vorzugsweise wird der Isolierstoff nach dem Einfüllen unter leichten Überdruck- 0,5 bis 2 bar - gesetzt. Nach dem Vemetzen oder Vulkanisation bzw. andersartiger chemischer oder physikalischer Reaktion ist ein solcher lsolierstoff fest, aber elastisch haftend mit den im Innenraum befindlichen Flächen (Innenflächen, Grenzflächen) des lsolators 1, der Grundplatte 2, der Kopfelektrode 3, des Hochspannungskabels 4, des Feldsteuerelementes 8 und des Leiterabschlusses 6 verbunden, so daß keine Möglichkeit einer Leckage oder eines Isolierstoffverlustes besteht.

Um den typischerweise nur niedrigen Wärmeleitwert und die damit verbundenen ungünstigen thermischen Eigenschaften eines solchen Isolierstoffes 9 auszugleichen bzw. zu beheben, werden die innerhalb des Endverschlusses produzierten Stromwärmeverluste minimiert, indem der Leiterabschluß 6 mit einem größeren Querschnitt als der Leiter 5 versehen wird, eine höhere elektrische Leitfähigkeit als der Leiter 5 aufweist und zudem von der Kopfelektrode bis maximal zum Ende des Feldsteuerelementes 8 verlängert ist. Hierdurch verringert sich der wirksame ohmsche Widerstand hinsichtlich der Stromleitung im Endverschluß.

Der wesentlich vergrößerte Querschnitt des Leiterabschlusses 6 hat zudem den weiteren Vorteil, daß der Wärmeleitwert des Leiterabschlusses 6 erhöht wird, so daß die im Hochspannungskabel 4 im Innenraum des Endverschlusses produzierte Verlustwärme durch verstärkte Wärmeleitung im Leiterabschluß 6 zur Kopfelektrode 3 abgeleitet wird. Mit anderen Worten ist der axiale Wärmeleitwert des Leiterabschlusses 6 größer als der axiale Wärmeleitwert des Leiters 5. Durch diese Maßnahmen ist es möglich, einen Isolierstoff 9 mit ungünstigen Wärmeleiteigenschaften in einem Freiluftendverschluß für Hochspannungskabel mit Nennspannungen über 36 kV einzusetzen. Die Wärmeabfuhr erfolgt primär in Axialrichtung und lediglich in untergeordnetem Umfang in Radialrichtung durch den Isolierstoff 9.

## Patentansprüche

1. Kabelendverschluß mit einem Isolator (1) mit Stützereigenschaften, dessen Stirnflächen mittels einer Grundplatte (2) und einer Kopfelektrode (3) verschlossen sind, wobei ein Hochspannungskabel (4) durch die Grundplatte (4) geführt und der Leiter (5) dieses Hochspannungskabels über einen Leiterabschluß (6) elektrisch mit einem Anschluß (7) außerhalb der Kopfelektrode (3) verbunden ist und wobei das Hochspannungskabel (4) mit einem Feldsteuerelement (8) versehen ist, wobei ein in flüssiger Form in den Isolator (1) einfüllbarer und anschließend aufschäumender elektrischer Isolierstoff eingesetzt wird, **dadurch gekennzeichnet, daß** der in flüssiger Form in den Isolator (1) einfüllbare und geschäumte oder anschließend aufschäumende lsolierstoff (9) insbesondere vernetzend ist, gut an allen Materialien der Komponenten im Isolator-Innenraum, wie Isolator (1), Kabelisolierung und Feldsteuerelement (8) haftend ist und den Innenraum des Isolators (1) vollständig ausfüllt.

2. Kabelendverschluß nach Anspruch 1, **dadurch gekennzeichnet, daß** der Isolierstoff (9) auf Silikongummi basiert.

3. Kabelendverschluß nach Anspruch 1, **dadurch gekennzeichnet, daß** der lsolierstoff (9) auf Polyurethan basiert.

4. Kabelendverschluß nach einem der vorstehenden Ansprüche, **dadurch gekennzeichnet, daß** der Leiterabschluß (6) von der Kopfelektrode (3) bis maximal zum Feldsteuerelement (8) reicht.

5. Kabelendverschluß nach einem der vorstehenden Ansprüche, **dadurch gekennzeichnet, daß** die elektrische Leitfähigkeit des Leiterabschlusses (6) höher als die des Leiters (5) des Hochspannungskabels (4) ist.

6. Kabelendverschluß nach einem der vorstehenden Ansprüche, **dadurch gekennzeichnet, daß** die axiale Wärmeleitfähigkeit des Leiterabschlusses (6) höher als die des Leiters (5) des Hochspannungskabels (4) ist.

7. Kabelendverschluß nach einem der vorstehenden Ansprüche, **dadurch gekennzeichnet, daß** der Leiterabschluß (6) rohrförmig ist.

8. Kabelendverschluß nach einem der vorstehenden Ansprüche, **dadurch gekennzeichnet, daß** die Verbindung zwischen dem Leiter (5) des Hochspannungskabels (4) und dem Leiterabschluß (6) gesteckt ist.

9. Kabelendverschluß nach einem der Ansprüche 1 bis 7, **dadurch gekennzeichnet, daß** die Verbindung zwischen dem Leiter (5) des Hochspannungskabels (4) und dem Leiterabschluß (6) geschraubt ist.

10. Kabelendverschluß nach einem der Ansprüche 1 bis 7, **dadurch gekennzeichnet, daß** die Verbindung zwischen dem Leiter (5) des Hochspannungskabels (4) und dem Leiterabschluß (6) geschweißt ist.

11. Kabelendverschluß nach einem der Ansprüche 1 bis 7, **dadurch gekennzeichnet, daß** die Verbindung zwischen dem Leiter (5) des Hochspannungskabels (4) und dem Leiterabschluß (6) gepreßt ist.

12. Kabelendverschluß nach einem der vorstehenden Ansprüche, **dadurch gekennzeichnet, daß** der lsolierstoff (9) unter leichtem Überdruck - vorzugsweise 0,5 bis 2 bar - gesetzt ist.

## Claims

1. Cable terminal with an insulator (1) with supporting properties, the end faces of which are closed by means of a base plate (2) and a head electrode (3), a high-voltage cable (4) being led through the base plate (4), and the conductor (5) of this high-voltage cable being electrically connected via a conductor termination (6) to a connection (7) outside the head electrode (3), and the high-voltage cable (4) being provided with a field-control element (8), with electrical insulating material which can be filled in liquid form into the insulator (1) and subsequently expands being used, **characterized in that** the insulating material (9) which can be filled in liquid form into the insulator (1) and is made to foam or subsequently expands is such that, in particular, it crosslinks, adheres well to all materials of the components in the insulator inner space, such as the insulator (1), cable insulation and field-control element (8), and completely fills the inner space of the insulator (1).

2. Cable terminal according to Claim 1, **characterized in that** the insulating material (9) is based on silicone rubber.

3. Cable terminal according to Claim 1, **characterized in that** the insulating material (9) is based on polyurethane.

4. The cable terminal as claimed in one of the preceding claims, **characterized in that** the conductor termination (6) reaches from the head electrode (3) to, at most, the field-control element (8).

5. Cable terminal according to one of the preceding claims, **characterized in that** the electrical conductivity of the conductor termination (6) is greater than that of the conductor (5) of the high-voltage cable (4).

6. Cable terminal according to one of the preceding claims, **characterized in that** the axial thermal conductivity of the conductor termination (6) is greater than that of the conductor (5) of the high-voltage cable (4).

7. Cable terminal according to one of the preceding claims, **characterized in that** the conductor termination (6) is tubular.

8. Cable terminal according to one of the preceding claims, **characterized in that** the connection between the conductor (5) of the high-voltage cable (4) and the conductor termination (6) is plugged.

9. Cable terminal according to one of Claims 1 to 7, **characterized in that** the connection between the conductor (5) of the high-voltage cable (4) and the conductor termination (6) is screwed.

10. Cable terminal according to one of Claims 1 to 7, **characterized in that** the connection between the conductor (5) of the high-voltage cable (4) and the conductor termination (6) is welded.

11. Cable terminal according to one of Claims 1 to 7, **characterized in that** the connection between the conductor (5) of the high-voltage cable (4) and the conductor termination (6) is pressed.

12. Cable terminal according to one of the preceding claims, **characterized in that** the insulating material (9) is subjected to slight positive pressure - preferably 0.5 to 2 bar.

## Revendications

1. Boîte d'extrémité de câble comprenant un isolateur (1) à caractéristiques de support, dont les faces frontales sont obturées à l'aide d'une plaque de base (2) et d'une électrode de tête (3), boîte dans laquelle un câble à haute tension (4) traverse la plaque de base (2) et l'âme (5) de ce câble à haute tension (4) est reliée électriquement par un embout d'extrémité (6) à une connexion (7) à l'extérieur de l'électrode de tête (3), dans laquelle le câble à haute tension (4) est muni d'un élément (8) de répartition de champ électrique et dans laquelle est utilisé un isolant électrique pouvant être introduit sous forme liquide dans l'isolateur (1) pour le remplir et pouvant ensuite être amené à l'état cellulaire, **caractérisée par le fait que** l'isolant (9) pouvant être introduit dans l'isolateur (1) pour le remplir sous forme liquide en étant à l'état cellulaire ou en pouvant ensuite être amené à l'état cellulaire est en particulier réticulable, adhère bien à tous les matériaux des composants se trouvant dans l'espace intérieur de l'isolateur, tels que l'isolateur (1), l'isolation du câble et l'élément (8) de répartition de champ, et remplit complètement l'espace intérieur de l'isolateur (1).

2. Boîte d'extrémité de câble suivant la revendication 1, **caractérisée par le fait que** l'isolant (1) est à base de caoutchouc de silicone.

3. Boîte d'extrémité de câble suivant la revendication 1, **caractérisée par le fait que** l'isolant (1) est à base de polyuréthane.

4. Boîte d'extrémité de câble suivant l'une des revendications précédentes, **caractérisée par le fait que** l'embout d'extrémité (6) du câble s'étend de l'électrode de tête (3) au maximum jusqu'à l'élément (8) de répartition de champ.

5. Boîte d'extrémité de câble suivant l'une des revendications précédentes, **caractérisée par le fait que** la conductivité électrique de l'embout d'extrémité (6) du câble est plus grande que celle de l'âme (5) du câble à haute tension (4).

6. Boîte d'extrémité de câble suivant l'une des revendications précédentes, **caractérisée par le fait que** la conductivité calorifique axiale de l'embout d'extrémité (6) du câble est plus élevée que celle de l'âme (5) du câble à haute tension (4).

7. Boîte d'extrémité de câble suivant l'une des revendications précédentes, **caractérisée par le fait que** l'embout d'extrémité (6) du câble est tubulaire.

8. Boîte d'extrémité de câble suivant l'une des revendications précédentes, **caractérisée par le fait que** la liaison entre l'âme (5) du câble à haute tension (4) et l'embout d'extrémité (6) est une liaison par enfichage.

9. Boîte d'extrémité de câble suivant l'une des revendications 1 à 7, **caractérisée par le fait que** la liaison entre l'âme (5) du câble à haute tension (4) et l'embout d'extrémité (6) est une liaison par vissage.

10. Boîte d'extrémité de câble suivant l'une des revendications 1 à 7, **caractérisée par le fait que** la liaison entre l'âme (5) du câble à haute tension (4) et l'embout d'extrémité (6) est une liaison par soudage.

11. Boîte d'extrémité de câble suivant l'une des revendications 1 à 7, **caractérisée par le fait que** la liaison entre l'âme (5) du câble à haute tension (4) et l'embout d'extrémité (6) est une liaison par sertissage.

12. Boîte d'extrémité de câble suivant l'une des revendications précédentes, **caractérisée par le fait que** l'isolant (9) est mis sous une légère surpression, de préférence de 0,5 à 2 bars.
